**Europäisches Patentamt**

**European Patent Office**

**Office européen des brevets**

(19)

(11) Veröffentlichungsnummer: **0 230 561**
**B1**

(12)

# EUROPÄISCHE PATENTSCHRIFT

(45) Veröffentlichungstag der Patentschrift:
**25.01.89**

(21) Anmeldenummer: **86116637.9**

(22) Anmeldetag: **29.11.86**

(51) Int. Cl.⁴: **B60K 23/04**, B60K 17/20

(54) Vorrichtung zum Umschalten einer Lamellenkupplung für das Sperren eines Verteilerdifferentialgetriebes zum Antrieb von zwei Fahrzeugachsen eines Kraftfahrzeuges.

(30) Priorität: **15.01.86 DE 3600876**

(43) Veröffentlichungstag der Anmeldung:
**05.08.87 Patentblatt 87/32**

(45) Bekanntmachung des Hinweises auf die Patenterteilung:
**25.01.89 Patentblatt 89/4**

(84) Benannte Vertragsstaaten:
**DE ES FR GB IT**

(56) Entgegenhaltungen:
**DE-A- 2 805 692**
**DE-A- 3 212 495**
**DE-A- 3 318 251**
**DE-A- 3 345 927**

(73) Patentinhaber: **Daimler-Benz Aktiengesellschaft,
Postfach 600202 Mercedesstrasse 136,
D-7000 Stuttgart 60(DE)**

(72) Erfinder: **Wörner, Günter Ing., Falkenstrasse 15,
D-7053 Kernen(DE)**
Erfinder: **Röhringer, Arno, Ing., Gerlinger Weg 9,
D-7257 Ditzingen - 5(DE)**
Erfinder: **Walter, Werner, Ing., Fasanenweg 9,
D-7332 Eislingen(DE)**

## Beschreibung

Die Erfindung bezieht sich auf eine Vorrichtung zum Umschalten einer Lamellenkupplung nach dem Oberbegriff von Patentanspruch 1.

Bei einer bekannten Vorrichtung dieser Art (DE-A 3 212 495) wird überwiegend angestrebt, das Sperrmoment der Lamellenkupplung in Abhängigkeit von Kenngrößen des Kraftfahrzeuges, wie Fahrgeschwindigkeit, Lenkwinkel oder Motordrehmoment vollautomatisch an unterschiedliche Betriebszustände des Fahrzeuges anzupassen. Zu diesem Zweck wird die Lamellenkupplung durch einen hydraulischen Arbeitsdruck entgegen einer hierbei als Kraftspeicher wirkenden Ausrückfeder in Form einer Tellerfeder eingerückt, wobei die Sperrwirkung durch Steuerung des Arbeitsdrucks von den Kenngrößen einstellbar ist.

Dagegen besteht die der vorliegenden Erfindung zugrunde liegende Aufgabe im wesentlichen darin, die Lamellenkupplung mit geringem Energieaufwand auch über eine längere Betriebsdauer so betreiben zu können, daß der Arbeitsdruck bei Auftreten des betreffenden Schaltsignales stets verzögerungsfrei einen vorbestimmten stetig fallenden Verlauf über der Zeit aufweist.

Die erläuterte Aufgabe ist gemäß der Erfindung mit den kennzeichnenden Merkmalen von Patentanspruch 1 in vorteilhafter Weise gelöst.

Bei der Vorrichtung nach der Erfindung ist ein ständiges Anliegen der Kupplungslamellen im geöffneten Zustand über die gesamte Lebensdauer der Kupplung gewährleistet. Somit kann die Vorrichtung nach der Erfindung vorteilhaft in solchen Fällen angewendet werden, in denen das Schließen der Lamellenkupplung besonders zeitkritisch ist und ein definierter Zeitverlauf des übertragbaren Drehmomentes verlangt wird. Bei der Vorrichtung nach der Erfindung ist durch das ständige Anliegen der Kupplungslamellen ein minimaler Schließweg ermöglicht. Weiterhin ist der Schaltpunkt, d.h., derjenige Zeitpunkt, bei dem die Kupplungslamellen vollständig aneinanderliegen, nicht von der Federkennlinie der federnden Mittel zum Einrücken der Lamellenkupplung bzw. nicht vom Einbauzustand dieser Mittel abhängig. Bei der Vorrichtung nach der Erfindung ist es weiterhin vorteilhaft, daß sich eine Setzen bzw. ein Verschleißen der Kupplungslamellen nicht in einer Verschiebung des Schaltpunktes und auch nicht als Verlängerung des Schaltvorganges auswirken kann.

Bei der Vorrichtung nach der Erfindung ist es weiterhin vorteilhaft, daß auf die Verwendung eines besonderen Umschaltventiles, welches bis zum Erreichen des Umschaltpunktes einen großen und danach einen reduzierten Abströmquerschnitt für das Arbeitsdruckmittel zur Verfügung stellt, verzichtet werden kann.

Bei der Vorrichtung nach der Erfindung sind die Schaltgeräusche gering, weil wegen des Fehlens eines Lüftweges weniger Druckmittel abfließen muß.

Schließlich sind bei der Vorrichtung nach der Erfindung aufwendige Einstellarbeiten hinsichtlich der federnden Mittel zum Einrücken der Lamellenkupplung nicht erforderlich.

Die Unteransprüche haben vorteilhafte Ausgestaltungen der Vorrichtung nach der Erfindung zum Gegenstand.

Die Erfindung ist nachstehend anhand zweier in der Zeichnung schematisch dargestellter Ausführungsbeispiele näher beschrieben. In der Zeichnung bedeuten

Fig. 1a einen Teilschnitt durch ein Verteilerdifferentialgetriebe mit einer zum Sperren verwendeten Lamellenkupplung und einer Vorrichtung nach der Erfindung zum Ein- und Ausrücken der Lamellenkupplung in einer ersten Ausführungsform,

Fig. 1b eine Variante für das Widerlager des Druckringes und dessen drehfeste Verbindung bei der Vorrichtung von Fig. 1a als zweite Ausführungsform, und

Fig. 2 ein Diagramm, bei dem das Kupplungsmoment M und der Arbeitsdruck p über der Schaltzeit t aufgetragen sind, wodurch das Schaltverhalten der Vorrichtung nach der Erfindung von Fig. 1 wiedergegeben ist.

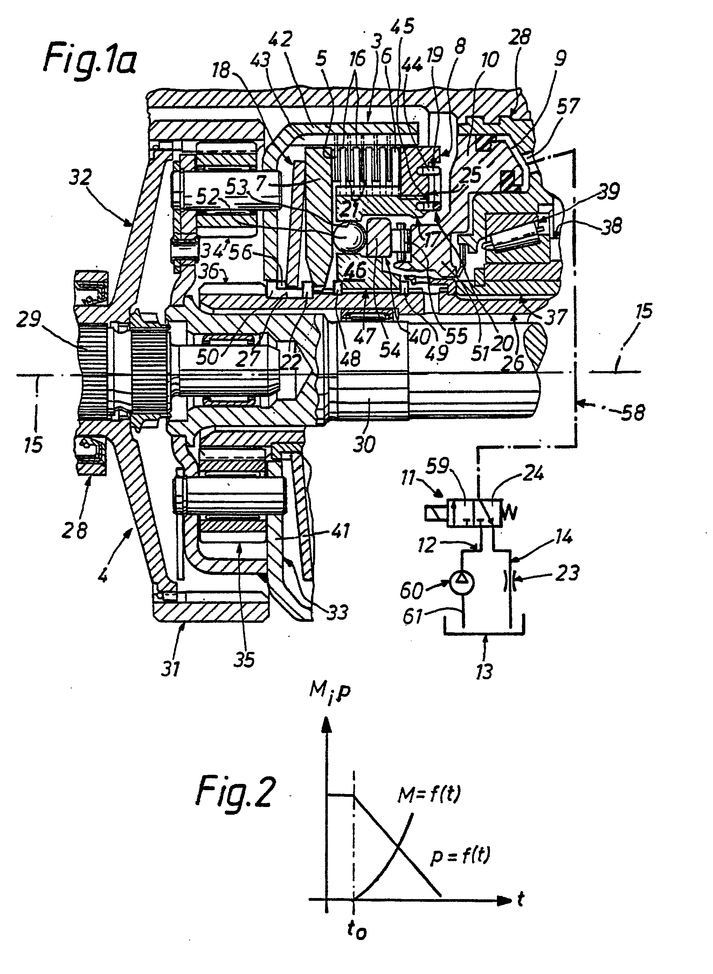

Unter Bezugnahme auf Fig. 1a sind in einem Getriebegehäuse 28 eines Verteilerdifferentialgetriebes 4 zentrisch bzw. koaxial zu einer Hauptdrehachse 15–15 angeordnet

– eine von einer Antriebsmaschine über ein Wechselgetriebe in nicht mehr dargestellter Weise antreibbare Eingangswelle 29

– ein mit der Eingangswelle 29 in drehfester Antriebsverbindung durch einen Antriebssteg 32 stehendes äußeres Zentralrad 31

– ein miteinander kämmende innere und äußere Planeten 34 und 35 lagernder Planetenträger 33

– eine mit dem Planetenträger drehfest verbundene innere zentrische Ausgangswelle 30

– ein von der Ausgangswelle 30 durchsetztes ringförmiges inneres Zentralrad 36

– eine mit dem inneren Zentralrad 36 drehfest verbundene und zur inneren Ausgangswelle 30 konzentrische Ausgangswelle 26

– eine zur Ausgangswelle 26 konzentrisch äußere Getriebewelle 37

– ein bewegungsfest auf der Getriebewelle 37 festgelegtes Eingangszahnrad 38

– eine die Getriebewelle 37 mit dem Eingangszahnrad 38 gegenüber dem Getriebegehäuse 28 abstützende Wälzlageranordnung 39

– eine zwischen dem Eingangszahnrad 38 und dem Planetenträger 33 angeordnete Lamellenkupplung 3

– ein an der dem Planetenträger 33 benachbarten Endlamelle 5 zur Anlage bringbarer Druckring 7

– eine unmittelbar auf den Druckring 7 einwirkende Tellerfeder 18

– eine zwischen der Lamellenkupplung 3 und dem Eingangszahnrad 38 angeordnete ringförmige Arbeitsdruckkammer 9 des Getriebegehäuses 28

– ein in der Arbeitsdruckkammer 9 axial verschiebbar aufgenommener ringförmiger Axialkolben 10 sowie eine vom Axialkolben 10 betätigte und auf den Druckring 7 einwirkende Ausrückvorrichtung 40.

Das von der Eingangswelle 29 antreibbare äußere Zentralrad 31 kämmt mit den äußeren Planeten 34 – dagegen das mit der konzentrischen Ausgangswelle 26 drehfest verbundene innere Zentralrad 36 mit den inneren Planeten 35. Die der Lamellenkupplung 3 benachbarte innere Seitenscheibe 41 des Planetenträgers 33 weist an ihrem radial äußeren Bereich einen trommelartigen Ansatz 42 zur Bildung eines Lamellenträgers auf, der mit inneren Axialnuten 43 zur drehfesten Halterung der äußeren Lamellen 21 der Lamellenkupplung 3 versehen ist. Zwischen die äußeren Lamellen 21 greifen wechselseitig innere Lamellen 16 ein, die in entsprechender Weise in Axialnuten eines inneren Lamellenträgers 17 drehfest jedoch axial verschiebbar gehaltert sind. Während die mit dem Druckring 7 zusammenarbeitende Endlamelle 5 in dem äußeren Lamellenträger 42 gehalten ist, ist die entgegengesetzte Endlamelle 6 am inneren Lamellenträger 17 gehalten sowie an einem ringförmigen Widerlager 8 abstützbar, welches durch eine Nachstellvorrichtung 20 mit dem inneren Lamellenträger 17 gekoppelt ist. Die Nachstellvorrichtung 20 sieht im wesentlichen eine Schraubverbindung 25 zwischen dem Widerlager 8 und dem Lamellenträger 17 vor, wobei der eine Drehsinn der Schraubverbindung durch Selbsthemmung blockiert ist. In dem freigegebenen Drehsinn wirkt eine Spiralfeder 19 zwischen Lamellenträger 17 und Widerlager 8 derart, daß das Widerlager 8 in Richtung auf den Druckring 7 verlagert wird. Das äußere Federende 44 der Spiralfeder 19 greift in das Widerlager 8 ein, während das innere Federende 45 der Spiralfeder 19 in den Lamellenträger 17 eingreift. Der innere Lamellenträger 17 weist eine innerhalb der Lamellen 6, 16 liegende Nabe 46 auf, die mittels einer Keilnutenverzahnung 47 auf der Getriebewelle 26 undrehbar – und mittels beiderseitiger Sicherungsringe 48 und 49 auch axial unverschiebbar festgelegt ist. Die als Ausgangswelle verwendete Getriebewelle 26 weist eine zwischen der Nabe 46 und dem inneren Zentralrad 36 liegende Umfangsnut 27 auf, in der ein winkelförmiger Lagerring 50 und ein Sicherungsring 22 in den Richtungen der Kupplungsachse bzw. Getriebehauptdrehachse 15–15 unbeweglich festgelegt sind. Der Sicherungsring 22 bildet ein Widerlager, welches den Druckring 7 in der auf den Planetenträger 33 weisenden Richtung der Getriebehauptdrehachse 15–15 unbeweglich gegenüber dem Lamellenträger 17 festlegt. Der Lagerring 50 bildet unter Zwischenfügung eines Stützringes 56 ein Widerlager für die Tellerfeder 18, welche das radial innere Ende der Feder in der auf den Planetenträger 33 weisenden Richtung der Getriebehauptdrehachse 15–15 gegenüber dem Lamellenträger 17 unbeweglich festlegt. Die Ausrückvorrichtung 40 weist einen Druckring 51 auf, welcher mit dem Axialkolben 10 einteilig ausgebildet ist und über ein Axialwälzlager 55 auf einen Stellring 54 arbeitet, welcher über Kugeln 52 – welche in axialen Durchgängen 53 der Nabe 46 formschlüssig jedoch mit Bewegungsspiel geführt sind – den Druckring 7 in Ausrückrichtung betätigt.

In die Arbeitsdruckkammer 9 mündet ein Druckkanal 57, der an eine Druckleitung 58 angeschlossen ist, die zu einem Steuerventil 11 führt. Das Steuerventil 11 ist in einer Stellung 24 gezeichnet, die durch Federkraft geschaltet ist. In der Stellung 24 ist die Druckleitung 58 mit einer zu einem druckentlasteten Vorratsbehälter 13 führenden Rücklaufleitung 14 verbunden, welche eine hydraulische Drosselvorrichtung 23 enthält. In einer durch ein elektrisches Schaltsignal ausgelösten Stellung 59 des Steuerventiles 11 ist die Druckleitung 58 mit einer Arbeitsdruckleitung 12 verbunden, welche an die Druckseite einer Druckmittelpumpe 60 angeschlossen ist. Die Druckmittelpumpe 60 saugt über eine Leitung 61 aus dem Vorratsbehälter 13 Druckmittel an.

In der Stellung 24 des Steuerventiles 11 ist die Arbeitsdruckkammer 9 über die Rücklaufleitung 14 entlastet, sodaß die Lamellenkupplung 3 durch die Tellerfeder 18 vollständig eingerückt ist. Somit ist das innere Zentralrad 36 mit dem Planetenträger 33 im wesentlichen starr verbunden, so daß das Differentialgetriebe gesperrt ist und als Block umläuft, wodurch die Eingangswelle 29 mit der Ausgangswelle 30 starr verbunden ist.

Wird das Steuerventil 11 durch ein elektrisches Schaltsignal in seine Stellung 59 umgeschaltet, dann ist die Rücklaufleitung 14 gegenüber der Druckleitung 58 gesperrt und letztere mit der Arbeitsdruckleitung 12 verbunden. Hierdurch wird der Axialkolben 10 in der Arbeitsdruckkammer 9 mit Druck beaufschlagt und betätigt über seinen Druckring 51 und die Ausrückvorrichtung 40 den Druckring 7 bis in dessen ausgerückte Endstellung an seinem Widerlager 22. In dieser Stellung des Druckringes 7 sind die Lamellen 21 und 6 des äußeren Lamellenträgers 42 ohne wesentlichen drehmomentübertragenden Eingriff gegenüber den Lamellen 6, 16 des inneren Lamellenträgers 17, so daß die Lamellenkupplung 3 gelöst ist – jedoch die einzelnen Lamellen noch aneinander anliegen – ein wesentliches Lüftspiel also nicht vorhanden ist. Sollten an dem Druckring 7, den Lamellen 5, 6, 16, 21 bzw. am Widerlager 8 Setz- oder Verschleißerscheinungen aufgetreten sein, sind diese durch die Nachstellvorrichtung 20 ausgeglichen, so daß an der Lamellenkupplung 3 über ihre gesamte Lebensdauer kein Lüftspiel auftritt. Erfolgt gemäß Figur 2 im Zeitpunkt $t_0$ ein Schaltsignal bzw. ein Schaltimpuls zum Einrücken der Kupplung 3, so wird ersichtlich, daß der Arbeitsdruck in der Arbeitsdruckkammer 9 verzögerungsfrei abfällt – und zwar mit einer etwa linearen Kennung gemäß der Charakteristik der Drosselvorrichtung 23. Ebenso steigt das Kupplungsmoment M verzögerungsfrei und etwa progressiv über die Zeit an.

Für das Wesen der Erfindung ist es unerheblich, ob das Eingangszahnrad 38 mit seiner Getriebewelle 37 direkt durch die Ausgangswelle 26 oder unter Zwischenfügung einer weiteren schaltbaren Lamellenkupplung antreibbar ist.

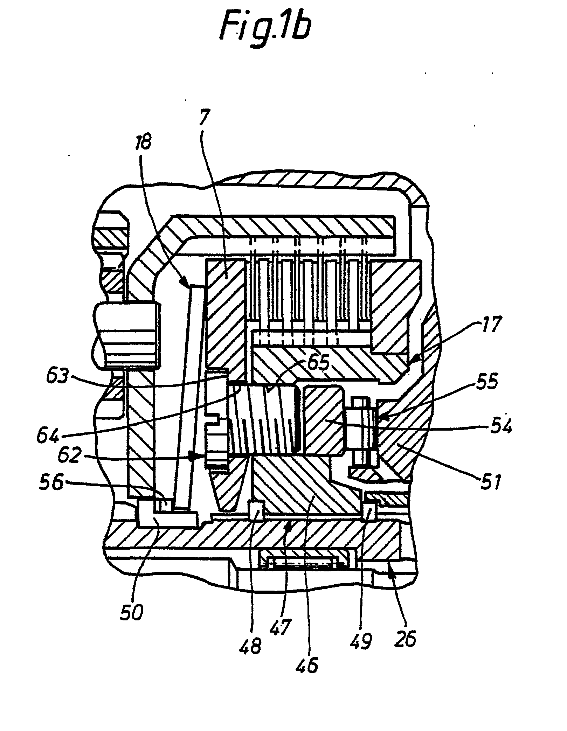

Bei der Ausführungsform der Fig. 1b sind anstelle des Sicherungsringes 22 von Fig. 1a als Widerlager für den Druckring 7 Anschlagschrauben 62 verwendet, deren Schraubbolzen in zur Kupplungsachse achsparallele Gewindebohrungen 65 in der Nabe 46 des Lamellenträgers 17 eingeschraubt sind und korrespondierende Durchgänge 64 im Druckring 7 durchsetzen. Als eigentliches Widerlager arbeiten die Schraubköpfe der Anschlagschrauben 62 mit entsprechenden Ansätzen 63 an den Durchgängen 64 zusammen. Der Druckring 7 kann über seine Durchgänge 64 auch drehfest gegenüber dem Lamellenträger 17 festgelegt sein, wobei dessen Nabe 46 in Übereinstimmung mit der Ausführungsform von Fig. 1 über korrespondierende Keilnutenverzahnungen 47 und beiderseitige Sicherungsringe 48 und 49 unbeweglich auf der konzentrischen Ausgangswelle 26 festgelegt ist, welche auch das Widerlager zur Abstützung der die Kupplung über den Druckring 7 einrückenden Tellerfeder 18 unter Vermittlung von Distanzringen 50, 56 aufweist. Die Anschlagschrauben 62 sind auf demselben Radius zur Kupplungsachse angeordnet wie der über den Stellring 54 und die nicht in der Zeichnungsebene liegenden Kugeln auf den Druckring 7 im Ausrücksinne arbeitende Druckring 51 des Arbeitsdruckkolbens.

## Patentansprüche

1. Vorrichtung zum Umschalten zwischen einer eingerückten und einer ausgerückten Stellung einer Lamellenkupplung (3) zum Sperren eines von einer Antriebsmaschine aus antreibbaren Verteilerdifferentialgetriebes (4) für den Antrieb von zwei Fahrzeugachsen eines Kraftfahrzeuges, bei der die eine Stellung durch Federkraft und die andere Stellung durch hydraulische Hilfskraft unter Vermittlung eines sich an eine der beiden Endlamellen des Lamellenpaketes anlegenden Druckringes (7) und eines zur Abstützung des Lamellenpaketes durch Anlage an der anderen Endlamelle verwendeten Widerlagers (8) sowie eines die Hilfskraft liefernden und vom Druck einer Arbeitsdruckkammer (9) beaufschlagten Axialkolbens (10) schaltbar und die Arbeitsdruckkammer durch ein Steuerventil (11) mit einer unter Arbeitsdruck setzbaren Arbeitsdruckleitung bzw. mit einer zu einem im wesentlichen druckentlasteten Vorratsbehälter führenden Rücklaufleitung in Verbindung bringbar ist, und bei der der Druckring in beiden Richtungen der Kupplungsachse beweglich und das Widerlager in der vom Druckring wegweisenden Richtung der Kupplungsachse unbeweglich gegenüber einem die Lamellen der einen Kupplungshälfte drehfest halternden Lamellenträger (17) angeordnet sind, dadurch gekennzeichnet, daß die eingerückte Stellung durch die Federkraft (18) schaltbar und das Widerlager (8) ausschließlich in der auf den Druckring (7) weisenden Richtung der Kupplungsachse (15–15) durch eine weitere Federkraft (19) einer Nachstellvorrichtung (20) gegenüber dem Lamellenträger (17) verlagerbar sowie der Druckring (7) in der von dem Widerlager (8) der Lamellen (5, 6, 16, 21) weg weisenden Richtung der Kupplungsachse (15–15) an einem weiteren gegenüber dem Lamellenträger (17) festgelegten Widerlager (22, 62) abstützbar ist und die Rücklaufleitung (14) eine hydraulische Drosselvorrichtung (23) enthält, die in einer die Lamellenkupplung (3) in die eingerückte Stellung bringenden Stellung (24) des Steuerventiles (11) wirkungsmäßig zwischen Arbeitsdruckkammer (9) und Vorratsbehälter (13) geschaltet ist.

2. Vorrichtung nach Anspruch 1, dadurch gekennzeichnet, daß die Federkraft zum Einrücken der Lamellenkupplung (3) durch eine unmittelbar am Druckring (7) angreifende Tellerfeder (18) erzeugt wird.

3. Vorrichtung nach Anspruch 1 oder 2, dadurch gekennzeichnet, daß das Widerlager (8) der Lamellen (5, 6, 16, 21) mit dem Lamellenträger (17) sowohl schraubbeweglich als auch durch eine Torsionsfeder (19) verbunden ist.

4. Vorrichtung nach Anspruch 3, dadurch gekennzeichnet, daß die Schraubverbindung (25) selbsthemmend ist.

5. Vorrichtung nach Anspruch 3 oder 4, dadurch gekennzeichnet, daß als Torsionsfeder eine Spiralfeder (19) verwendet ist.

6. Vorrichtung nach einem der Ansprüche 1 bis 5, dadurch gekennzeichnet, daß der Lamellenträger (17) auf einer zur Getriebehauptdrehachse (15–15) zentrischen Getriebewelle (26) unbeweglich festlegbar und als Widerlager des Druckringes (7) ein in einer Umfangsnut (27) der Getriebewelle (26) gehaltener Sicherungsring (22) verwendbar ist.

7. Vorrichtung nach einem der Ansprüche 1 bis 5, dadurch gekennzeichnet, daß als Widerlager für den Druckring (7) mehrere achsparallel zur Kupplungsachse (15–15) mit dem Lamellenträger (17) verschraubte Anschlagschrauben (62) verwendet sind, die den gleichen Abstand zur Kupplungsachse (15–15) aufweisen wie die am Druckring (7) angreifenden Kupplungsausrückmittel (52).

## Claims

1. Device for changing a multiple disc clutch (3) between an engaged and a release position for locking a transfer differential gear (4) drivable from a driving motor for the driving of two vehicle axles of a motor vehicle, in which device one position may be obtained by the action of a spring and the other position may be obtained by additional hydraulic force with the intervention of a pressure ring (7) applying on one of the two end discs of the multiple disc clutch, and of a counter-bearing (8) used for supporting the set of discs by application on the other end disc, as well as of an axial piston (10) supplying the additional force and impinged by the pressure of a working pressure chamber (9), and in which device the working pressure chamber may be made to communicate, by means of a control valve (11) with a working pressure duct which can be set under working pressure, or with a return duct leading to a substantially pressure-released supply container, and also in which device the pressure ring is arranged to be movable in both directions of the clutch axis and the counter-bearing is arranged, in the direction of the clutch axis away from the pressure ring, stationarily relative to a disc carrier (17) holding solid in rotation the disc of one half of the clutch, characterised in that the engaged position can be obtained by the force of a spring (18) and the counter-bearing (8) can be shifted relative to the disc carrier (17) exclusively in the direction of the clutch axis (15–15) towards the pressure ring (7) by a further spring force (19) of an adjustment device (20), in that the pressure ring (7), in the direction of the clutch axis (15–15) away from the counter-bearing (8) of the discs (5, 6, 16, 21), can be supported on a further counter-bearing (22, 62) fixed relative to the disc carrier (17), and in that the return duct (14) contains a hydraulic throttling device (23) which in a position (24) of the control valve (11) bringing the multiple disc clutch (3) into the engaged position is operatively engaged between working pressure chamber (9) and supply container (13).

2. Device according to Claim 1, characterised in that the spring force for the engagement of the multiple disc clutch (3) is produced by a disc spring (18) acting directly on the pressure ring (7).

3. Device according to Claim 1 or 2, characterised in that the counter-bearing (8) of the discs (5, 16, 6, 21) is connected with the disc carrier (17) both screwingly movable and with a torsion spring (19).

4. Device according to Claim 3, characterised in that the screwed connection (25) is self-locking.

5. Device according to Claim 3 or 4, characterised in that a spiral spring (19) is used as torsion spring.

6. Device according to one of Claims 1 to 5, characterised in that the disc carrier (17) may be stationarily fixed on a gear shaft (26) centric to the main gear axis (15–15), and in that a securing ring (22) held in a peripheral groove (27) of the gear shaft (26) may be used as counter-bearing for the pressure ring (7).

7. Device according to one of Claims 1 to 5, characterised in that several stop screws (62) screwed with the disc carrier (17) axially parallel with the clutch axis (15–15) are used as counter-bearing for the pressure ring (7) and are at the same distance to the clutch axis (15–15) as are the clutch release means (52) engaging on the pressure ring (7).

## Revendications

1. Dispositif pour commuter un embrayage à disques (3) entre une position embrayée et une position débrayée en vue du blocage d'une transmission à différentiel distributeur (4), pouvant être entraînée par un moteur d'entraînement, en vue de l'entraînement de deux essieux d'un véhicule automobile, dans lequel une des positions peut être établie par une force élastique et l'autre position par une force auxiliaire hydraulique en faisant intervenir un anneau de pression (7), s'appliquant contre un des deux disques extrêmes de l'ensemble de disques, et un contre-appui (8), utilisé pour soutenir l'ensemble de disques par application contre l'autre disque extrême, ainsi qu'un piston axial (10) produisant la force auxiliaire et sollicité par la pression d'une chambre de pression de travail (9), et la chambre de pression de travail peut être mise en communication, au moyen d'un distributeur de commande (11), avec un conduit de pression de travail pouvant être sollicité par la pression de travail ou bien avec un conduit de retour aboutissant à un réservoir de stockage sensiblement déchargé en pression, et dans lequel l'anneau de pression est disposé, avec possibilité de déplacement dans les deux sens de l'axe d'embrayage, et le contre-appui sans possibilité de déplacement dans le sens de l'axe d'embrayage, qui est tourné à l'opposé de l'anneau de pression, par rapport à un support de disques (17) maintenant de façon non-tournante les disques d'une des moitiés de l'embrayage caractérisé en ce que la position embrayée peut être établie par la force élastique (18) et le contre-appui (8) peut être déplacé par rapport au support de disques (17) exclusivement dans le sens de l'axe d'embrayage (15–15), qui est orienté vers l'anneau de pression (7) par une autre force élastique (19) d'un dispositif d'adaptation (20), tandis que l'anneau de pression (7) peut être soutenu, dans le sens de l'axe d'embrayage (15), qui est tourné à l'opposé du contre-appui (8) des disques (5, 6, 16, 21), par un autre contre-appui (22, 62) fixe par rapport au support de disques (17), et en ce que le conduit de retour (14) contient un dispositif d'étranglement hydraulique (23), qui est commandé, dans une position (24) du distributeur de commande (11) amenant l'embrayage à disques (3) dans la position embrayée, de façon à agir entre la chambre de pression de travail (9) et le réservoir de stockage (13).

2. Dispositif selon la revendication 1, caractérisé en ce que la force élastique servant à l'embrayage de l'embrayage à disques (3) est produite par un ressort annulaire (18) agissant directement sur l'anneau de pression (7).

3. Dispositif selon la revendication 1 ou 2, caractérisé en ce que le contre-appui (8) des disques (5, 6, 7, 21) est relié avec le support de disques (17), d'une part, par une liaison mobile par vissage et, d'autre part, par un ressort de torsion (19).

4. Dispositif selon la revendication 3, caractérisé en ce que la liaison par vissage (25) est irréversible.

5. Dispositif selon la revendication 3 ou 4, caractérisé en ce qu'on utilise un ressort spiral (19) comme ressort de torsion.

6. Dispositif selon une des revendications 1 à 5, caractérisé en ce que le support de disques (17) peut être fixé sans possibilité de mouvement sur un arbre de transmission (26) centré par rapport à l'axe principal de rotation de la transmission (15–15) et en ce que, comme contre-appui de l'anneau de pression (7), peut être utilisée une bague d'arrêt (22) maintenue dans une gorge (27) de l'arbre de transmission (26).

7. Dispositif selon une des revendications 1 à 5, caractérisé en ce que, comme contre-appui pour l'anneau de pression (7), sont utilisées plusieurs vis de butée (62), vissées dans le support de disques (17) parallèlement à l'axe d'embrayage (15–15) et qui ont le même espacement par rapport à l'axe d'embrayage (15–15) que les moyens de débrayage d'embrayage (52) agissant sur l'anneau de pression (7).

Fig.1a

Fig.2

# Fig.1b